# EUROPÄISCHE PATENTANMELDUNG

(11) **EP 4 661 153 A2**
(43) Veröffentlichungstag der Anmeldung: **10.12.2025**
(21) Anmeldenummer: 25169646.4
(22) Anmeldetag: 10.04.2025
(51) Int. Cl.: H01M 10/42, H01M 50/211, H01M 50/503, H01M 50/516, H01M 50/519, H01M 50/569

(54) **AKKUPACK UND VERFAHREN ZU DESSEN HERSTELLUNG**

(30) Priorität: 06.06.2024 DE 102024115766
(71) Anmelder: Metabowerke GmbH, 72622 Nürtingen (DE)
(72) Erfinder: Wolf, Alexander, 73240 Wendlingen (DE)
(74) Vertreter: Lorenz & Kollegen

(57) **Zusammenfassung**

Die Erfindung betrifft einen Akkupack (1) zur Versorgung eines elektrisch angetriebenen Bearbeitungsgeräts mit elektrischer Antriebsleistung, wobei der Akkupack (10) aufweist: wenigstens zwei Pouchzellen (10, 20, 30), wobei die Pouchzellen (10) Zelltabs (11, 21, 31) aufweisen und derart ausgebildet und in einem Stapel (S) angeordnet sind, dass die Zelltabs (11, 21, 31) auf einer gemeinsamen Tabseite (22) des Stapels (S) in Tabspalten (22a, 22b) angeordnet sind, eine Leiterplatte (40), wobei die Leiterplatte (40) auf der gemeinsamen Tabseite (22) des Stapels (S) angeordnet ist und mit den Zelltabs (11, 21, 31) elektrisch verbunden ist, und wenigstens einen elektrischen Zellverbinder (24) zur elektrischen Verbindung von zwei Zelltabs (11, 21, 31) zweier benachbarter Pouchzellen (10, 20, 30) mit der Leiterplatte (40). Die Leiterplatte (40) weist Ausnehmungen (44) auf, durch die sich die Zelltabs (11, 21, 31) auf die von den Pouchzellen (10, 20, 30) abgewandte Seite (42) der Leiterplatte (40) erstrecken und wobei der wenigstens eine Zellverbinder (24) auf der abgewandten Seite (42) der Leiterplatte (40) an dieser angebracht ist.

## Beschreibung

Die Erfindung betrifft ein Akkupack und ein Verfahren zur Herstellung eines Akkupacks.

Zur Erlangung höherer Leistungsfähigkeit oder größerer Energiespeicherkapazität werden gleichartige galvanische Elemente in Form von einzelnen Batterie- oder Akkumulatorzellen bei Bedarf in Gruppen zu Zellenpaketen zusammen geschaltet.

Die Formen solcher Einzelzellen, die in der Praxis zum Einsatz kommen, sind sehr vielfältig. Für jede Form existieren verschiedene Möglichkeiten und Verfahren sie untereinander zu verbinden und zu kontaktieren. Neben Knopfzellen gibt es diverse Rundzellentypen, wie beispielsweise in der US 3776,778 B1 offenbart, sowie prismatische Zellen und sogenannte Flachzellen. Die letztgenannte Bauform wird im Üblichen auch als Pouchzelle (deutsch Beutelzelle) oder als Coffee-Pack bezeichnet. Sie findet bislang überwiegend, aber nicht ausschließlich Anwendung im Bereich der Lithium-Polymer-Akkumulatoren. Diese Form ist nicht genormt und kann individuell auf Kundenwunsch angepasst werden. Kennzeichnend sind die herausgeführten, von der Zelle abstehenden Elektroden, die meistens als Kontaktlaschen aus Metallstreifen bestehend ausgeführt sind.

Zur Verschaltung von Flach- bzw. Pouchzellen kommen bisher allgemein vier Möglichkeiten zur Anwendung: Direktes Verlöten der Kontaktlaschen bzw. Elektrodenkontakte der einzelnen Zellen untereinander. Auflöten der Elektrodenkontakte auf eine Leiterplatte, durch welche die Zellen untereinander verbunden werden. Direktes Verschweißen der Elektrodenkontakte der einzelnen Zellen untereinander. Verbinden der einzelnen Elektrodenkontakte untereinander durch Klemmverbindungselemente.

Die Kontaktlaschen von Pouchzellen bestehen meist aus Metalllegierungen, die sich, wenn überhaupt, nur mit für die Metalllegierung speziellem Lot löten lassen. Diese Metalllegierungen können nicht nur zwischen Zellenherstellern oder einzelnen Zellenserien unterschiedlich sein und ohne Ankündigung des Herstellers geändert werden, sondern die Metalllegierungen sind oftmals bereits zwischen den beiden Elektrodenkontakten einer einzelnen Zelle unterschiedlich ausgeführt. So muss für diese Verbindung verschiedene Ausstattung parat gehalten und bei Bedarf immer wieder neu angeschafft werden. Mitarbeiter müssen immer wieder neue Löttechniken erlernen. Dennoch kann eine sicher haltende Lötverbindung nicht auf Anhieb garantiert werden.

Abgesehen davon stellt das Verlöten, egal ob die Zellenkontakte direkt miteinander verbunden oder auf eine Leiterplatte aufgelötet werden, eine sehr zeitaufwändige Form der Zellenmontage dar. Schließlich kommt erschwerend hinzu, dass durch den Lötvorgang ein für die Zelle schädigender Wärmeeintrag möglich ist. Außerdem besteht generell die Gefahr, dass heißes Lot auf die Zelle tropft und diese beschädigt wird.

Eine Leiterplattenmontage, bei welcher die Kontaktlaschen bzw. Elektrodenkontakte der Zellen auf die Lötflächen einer Leiterplatte aufgelötet werden, hat im Gegensatz zu einer direkten Verbindung der Zellenkontakte untereinander bei Beutelzellen mehrere Vorteile: Zum einen ist eine Verschaltung der Einzelzellen zu einer bestimmten Parallel- und Seriellkombination gerade bei Zellenpaketen mit mehreren Zellen unter Umständen geometrisch einfacher und sauberer lösbar. Außerdem lassen sich die Kontakte nachher besser isolieren. Außerdem ist ein raumsparender Aufbau möglich.

Ferner können weitere Verbindungselemente, wie z. B. Litzen für Einzelzellenspannungsabgriffe, einfacher angelötet werden, statt diese als drittes Element an die Elektrodenkontakte löten zu müssen. Auch kann die Leiterplatte gleich weitere Schaltungselemente, wie zum Beispiel elektronische Baugruppen oder Sicherungen tragen, anstatt diese, wie bei einer rein direkten Elektrodenkontaktierung gesondert anbringen zu müssen. Die Nachteile einer Lötverbindung bleiben aber dennoch im vollen Umfang erhalten.

Beim Schweißen ist der Wärmeeintrag geringer als beim Löten. Jedoch ergeben sich auch hier große Schwierigkeiten aufgrund der zu schweißenden Materialpaarungen und vor allem auch durch die Möglichkeiten üblicher Zellenschweißautomaten, bestimmte Positionen für Schweißpunkte räumlich zu erreichen. Daher findet Schweißen als Kontaktierungsform bei Beutelzellen äußerst selten Anwendung.

Die Druckschrift DE 20 2004 015 179 U1 beschreibt einen derartigen lötfreien Kontaktverbinder zum elektrischen Verbinden einer Vielzahl von Lithium-Polymer-Zellen in einer Parallelschaltung. Dabei werden die einzelnen Elektrodenkontakte mittels Leiterbrücken und Gewindeklötzchen zusammengepresst und so elektrisch miteinander verbunden.

Die Druckschrift WO 2007/121445 A2 beschreibt eine Anordnung, bei welcher flächige Elektrodenkontakte von unten her durch schlitzförmige Öffnungen einer Platte aus einem nicht-leitfähigem Material geführt und auf der gegenüberliegenden Oberseite umgebogen und mittels Anschlusselementen verschraubt werden. Zum Verschrauben werden Schrauben durch in den Anschlusselementen und den Elektrodenkontakten ausgebildeten Bohrungen geführt und in flächige Gegenelemente geschraubt, welche oberhalb der Platte zwischen den Öffnungen angeordnet sind.

Die bekannten mechanischen Montagemöglichkeiten, die eine Verbindung durch Klemmung oder Pressung erzielen, bestehen aus vielen Einzelelementen und benötigen einen recht hohen Montageaufwand und viel Bauraum. Vor allem aber sind sie aufgrund ihrer komplexen Geometrien und der relativ großen Anzahl der Einzelelemente, die für jeden Zellentyp und teilweise auch jedes Zellenpaket individuell angepasst werden müssen, aufwändig in der Herstellung, Beschaffung und Lagerhaltung und haben gegenüber den Löttechniken nur selten entscheidende Vorteile, so dass sie nur in wenigen Fällen zur praktischen Anwendung gelangen. Klemmverbindungen umgehen zwar die Nachteile der stofffügenden Verbindungstechniken, allerdings überwiegen hier dennoch meist deren Nachteile, nämlich der hohe Arbeitsaufwand, so dass letztendlich den Lötverbindungen in der Praxis der Vorzug gegeben wird.

Aus der US 6,225,778 B1 ist weiterhin eine Batteriepack mit einer Flach- bzw. Pouchzelle sowie mit mindestens einem Armierungsmaterial zum Abdichten der Flach- bzw. Pouchzelle die positive und negative Anschlusslaschen umfasst, welche sich von der Flach- bzw. Pouchzelle durch eine Versiegelung des Armierungsmaterial nach außerhalb erstrecken. Das Batteriepack weist ferner eine Leiterplatte, die mit den positiven und negativen Anschlüssen verbunden ist; und einen Behälter mit zwei Hauptwänden, die sich entlang zweier Hauptflächen der flachen Batteriezelle erstrecken. Mindestens ein Teil der Leiterplatte ist in einem Raum positioniert, der durch eine Abdichtung des Armierungsmaterial neben der Leiterplatte und der Innenfläche des Behälters definiert wird. Zumindest eine der beiden Hauptwände des Behälters ist zumindest teilweise aus einer Metallplatte gebildet. Die positiven und negativen Anschlüsse werden von dem Behälter gegen die Leiterplatte gedrückt.

Die EP 3 736 874 A1 beschreibt einen Akkupack mit mehreren Pouchzellen und einer Leiterplatte. Die Pouchzellen weisen Zelltabs zur elektrischen Verbindung auf und sind derart ausgebildet bzw. konfiguriert und in einem Stapel angeordnet, dass alle Zelltabs nur auf einer einzigen gemeinsamen Tabseite des Stapels in genau zwei Tabspalten angeordnet sind. Die abgewandten bzw. entfernten Endgrenzen der Tabspalten definieren bzw. begrenzen einen Zwischenbereich. Die Leiterplatte ist für vollständig und nur innerhalb des Zwischenbereichs angeordnet und mit den Zelltabs elektrisch verbunden.

In einer Ausgestaltungsvariante ist die Leiterplatte mit mehreren der Zelltabs mittels elektrischer Zellverbinder elektrisch verbunden. Die Zellverbinder ragen bzw. stehen jeweils über einen Plattenrand der Leiterplatte in Richtung mindestens einer der Endgrenzen der Tabspalten, hinaus. Dies ermöglicht, dass die Zellverbinder zu den Zelltabs hinreichen können. Dabei sind die elektrischen Zellverbinder ebenfalls in zwei Verbinderspalten parallel zueinander angeordnet sein.

Diese Lösung ermöglicht einen relativ kompakten Aufbau des Akkupacks. Zugleich soll erreicht werden, dass die Tabspalten zeitlich nach dem Anordnen von der Leiterplatte von seitlich außen weiterhin relativ gut zugänglich sein können, und somit eine relativ einfache Herstellung des Ackupacks.

Demgegenüber soll eine verbesserte Lösung für einen Akkupack mit Pouchzellen bereitgestellt werden.

Als Lösung schlägt die vorliegende Erfindung einen Akkupack mit den Merkmalen des Anspruchs 1 vor.

Demgemäß wird ein Akkupack zur Versorgung eines elektrisch angetriebenen Bearbeitungsgeräts mit elektrischer Antriebsleistung vorgeschlagen, wobei der Akkupack wenigstens zwei Pouchzellen aufweist, die Zelltabs aufweisen und derart ausgebildet und in einem Stapel angeordnet sind, dass die Zelltabs auf einer gemeinsamen Tabseite des Stapels in Tabspalten angeordnet sind. Weiterhin weist der Akkupack eine Leiterplatte auf, die auf der gemeinsamen Tabseite des Stapels angeordnet ist und mit den Zelltabs elektrisch verbunden ist.

Dadurch dass die Zelltabs auf der gleichen Seite wie die Leiterplatte angeordnet sind, sind die Verbindungswege für eine elektrische Verbindung verkürzt.

Weiterhin ist wenigstens ein elektrischen Zellverbinder zur elektrischen Verbindung von zwei Zelltabs zweier benachbarter Pouchzellen, mit der Leiterplatte vorgesehen. Weiterhin können selbstverständlich auch Zellverbinder zur elektrischen Verbindung eines einzelnen Zelltabs mit der Leiterplatte (Pluspol und Minuspol) vorgesehen sein.

Dabei weist die Leiterplatte Ausnehmungen auf, durch die sich die Zelltabs auf die von den Pouchzellen abgewandte Seite der Leiterplatte erstrecken können. Der wenigstens eine Zellverbinder ist ebenfalls auf der abgewandten Seite der Leiterplatte an dieser angebracht.

Die sich durch die Ausnehmungen der Leiterplatte hindurch erstreckenden Zelltabs der Pouchzellen können mit dem wenigstens einen elektrischen Zellverbinder, der mit der Leiterplatte elektrische verbunden und auf der abgewandten Seite der Leiterplatte an dieser angebracht ist, verbunden werden, wodurch eine elektrische Verbindung mit der Leiterplatte erreicht wird. Zugleich dient der Zellverbinder auch der elektrischen Verbindung der jeweiligen Zelltabs miteinander. Dabei können insbesondere die Zelltabs zweier benachbarter Pouchzellen über den Zellverbinder mit der Leiterplatte und miteinander elektrisch verbunden werden. Die beiden endseitigen Zelltabs, d.h. die den Plus- bzw. Minuspol des AKkupacks bildenden Zelltabs können einzeln in gleicher Weise über einen Zellverbinder mit der Leiterplatte verbunden werden.

Vorliegend wird immer von wenigstens einem Zellverbinder gesprochen, in der Regel sind jedoch immer mehrere Zellverbinder vorgesehen, beispielsweise bei fünf Pouchzellen, die in Reihe geschaltet sind, sind vier Zellverbinder erforderlich, um immer zwei Zelltabs zweier benachbarter Pouchzellen miteinander (für die gewünschte Reihenschaltung) und mit der Leiterplatte elektrisch zu verbinden, sowie zwei Zellverbinder zur elektrischen Verbindung des Minus- bzw. Pluspols mit der Leiterplatte.

In der Vergangenheit wurden üblicherweise die Zellen mit einem Zellverbinder verbunden und an diesen wurde eine Litze als Einzelzellspannungsmessung angelötet. Hierdurch wurde der Aufbau komplexer und störanfälliger. Bei der erfindungsgemäßen Lösung kann indes die Leiterplatte eine Einzelspannungsmessung der einzelnen über den wenigstens einen Zellverbinder verbundenen Pouchzellen vornehmen und mit Flexleiterbahnen oder Litzen die gemessenen Einzelspannungen an das Batteriemanagementsystem weitergeben. Der Abgriff der Einzelzellspannungen ist somit vereinfacht und zugleich zuverlässiger.

Durch die Anordnung des wenigstens einen Zellverbinders auf der Leiterplatte wird zum einen eine einfache und sichere Verbindung der Zelltabs mit der Leiterplatte geschaffen. Zum anderen wird ein besonders kompakter Aufbau bereitgestellt.

Der wenigstens eine Zellverbinder kann auf der Leiterplatte vormontiert sein. Hierdurch wird die Montage insgesamt deutlich vereinfacht.

Die Leiterplatte mit ihren Aussparungen dient weiter zu einer definierten Anordnung und Ausrichtung der Pouchzellen und insbesondere ihrer Zelltabs. Die Zelltabs sind auch bei dieser erfinderischen Lösung zeitlich nach dem Anordnen von der Leiterplatte von außen weiterhin gut zugänglich, und somit wird eine relativ einfache Herstellung des Akkupacks erreicht.

Gemäß einer Weiterbildung der Erfindung ist vorgesehen, dass zwei Zelltabs zweier benachbarter Pouchzellen zur elektrischen Verbindung mit der Leiterplatte unmittelbar miteinander und mit dem wenigstens einen elektrischen Zellverbinder verbunden sein können. So ist es denkbar, dass die beiden mit einem elektrischen Zellverbinder verbindbaren Zelltabs zweier benachbarter Pouchzellen nicht nur (zur elektrischen Verbindung mit der Leiterplatte) mit dem Zellverbinder verbunden sind, sondern auch untereinander, beispielsweise indem diese auf den Zellverbinder derart umgebogen werden, dass sich die Tabs teilweise im Verbindungsbereich mit dem Zellverbinder gegenseitig überlappen. Hierdurch kann eine besonders einfache und sichere elektrische Verbindung der Zellen mit einander und mit der Leiterplatte erreicht werden.

Es kann weiter vorgesehen sein, dass die Leiterplatte sich in einer Plattenebene erstreckt, die parallel zu einer Tabebene der Tabseite angeordnet ist, wobei die Tabebene der Tabseite eine durch die Tabspalten definierte Ebene umfasst.

Wie bereits vorstehend erwähnt, kann die Leiterplatte Messelektronik zur Messung von Spannungen der Pouchzellen beispielsweise zur Einzelspannungsmessung und/oder eine auslösbare Sicherungseinrichtung aufweisen.

Während im Stand der Technik die Zellen mit einem Zellverbinder verbunden und an diesen wurde eine Litze als Einzelzellspannungsmessung angelötet werden, kann der vorliegenden Lösung die Leiterplatte eine Einzelspannungsmessung der einzelnen über die Zellverbinder verbundenen Pouchzellen vornehmen und mit Flexleiterbahnen oder Litzen die gemessenen Einzelspannungen an das Batteriemanagementsystem weitergeben. Hierdurch wird wiederum ein besonders kompakter und weniger störanfälliger Aufbau bereitgestellt und die Langlebigkeit des Akkupacks kann erhöht werden.

Gemäß einer Weiterbildung der Erfindung kann vorgesehen sein, dass der wenigstens eine Zellverbinder starr ausgebildet ist.

Weiterhin können die Zelltabs benachbarter Pouchzellen und/oder einzelne Zelltabs (Plus- und Minuspol) mit dem wenigstens einen elektrischen Zellverbinder und optional miteinander durch eine stoffschlüssige Verbindung, insbesondere eine Schweißverbindung, oder durch eine kraft-und/oder formschlüssige Verbindung, insbesondere Verpressung oder Crimpen, elektrisch verbunden sein.

Gemäß einer Weiterbildung der Erfindung kann vorgesehen sein, dass der wenigstens eine elektrische Zellverbinder auf seiner den Zelltabs zugewandten Seite Schweißpunkte, insbesondere für das Herstellen einer Schweißverbindung durch Widerstandsschweißen mit den zu verbindenden Zelltabs aufweist.

Das Widerstandsschweißen und die hierfür vorgesehenen Schweißpunkte ist insbesondere dann vorteilhaft, wenn zwei Zelltabs benachbarter Pouchzellen im Verbindungsbereich mit dem Zellverbinder überlappend angeordnet sind, da mit einem einzigen Fügevorgang alle drei Fügepartner miteinander (elektrisch) verbunden werden können. Alternativ kann auch Laserstrahlschweißen genutzt werden, um (ohne speziell vorgesehene Schweißpunkte) mit einem einzigen Fügevorgang alle drei Fügepartner (elektrisch) miteinander zu verbinden.

Weiterhin kann unabhängig von der Verbindungsart des Zellverbinders mit dem oder den Zelltabs vorgesehen sein, dass der wenigstens eine elektrische Zellverbinder auf seiner der Leiterplatte zugewandten Seite mit der Leiterplatte durch eine stoffschlüssige Verbindung, insbesondere eine Lötverbindung elektrisch verbunden ist. Dabei kann der Zellverbinder flächig auf der Leiterplatte aufliegen und auf diese aufgelötet sein oder vorstehende Verbindungsbereiche (beispielsweise durch Umbiegen gebildet) aufweisen, die zur elektrischen Verbindung auf die Leiterplatte aufgelötet sind.

Zudem kann vorgesehen sein, dass das Akkupack eine weitere Leiterplatte aufweist. Die (erste) Leiterplatte, welche mit dem wenigsten seinen elektrischen Zellverbinder verbunden (bestückt) ist, dient primär zur Verbindung der Zelltabs. Eine weitere Funktion kann die optionale Einzelzellenmessung darstellen, wie vorstehend beschrieben. Selbstverständlich können auch weitere Funktionen von dieser (ersten) Leiterplatte übernommen werden.

In dem Fall, in dem eine weitere Leiterplatte vorgesehen ist, kann diese weitere Leiterplatte jedoch als Haupt-Leiterplatte (Haupt-PCB) fungieren. Dementsprechend kann die weitere Leiterplatte für eine vereinfachte Montage auf der Tabseite entfernter als die Leiterplatte von dem Stapel angeordnet sein, d.h. auf der von den Pouchzellen abgewandten Seite des wenigstens einen elektrischen Zellverbinders, und zusätzlich elektrisch mit der (ersten) Leiterplatte in bekannter Weise verbunden sein..

Die weitere Leiterplatte kann Leistungselektronik tragen, wobei die Leistungselektronik zur Steuerung der Abgabe der Antriebsleistung von dem Akkupack und/oder einer Aufnahme von Ladeleistung durch den Akkupack ausgebildet ist.

Alternativ oder zusätzlich kann die weitere Leiterplatte Benutzerschnittstellenelektronik tragen, wobei die Benutzerschnittstellenelektronik zur Interaktion mit einem Benutzer ausgebildet ist, und/oder Übertragungselektronik trägt, wobei die Übertragungselektronik zur kabellosen Übertragung von mindestens einem Betriebsparameter und/oder Betriebszustand ausgebildet ist.

Alternativ oder zusätzlich kann die weitere Leiterplatte auch eine auslösbare Sicherung zum Schutz des Akkupacks aufweisen. Diese auslösbare Sicherung kann zusätzlich oder alternativ zu einer auslösbaren Sicherung auf der (ersten) Leiterplatte vorgesehen sein.

Schließlich kann der Akkupack eine maximale elektrische Antriebsleistung von minimal 1 kW, insbesondere von minimal 2 kW, und/oder von maximal 10 kW, insbesondere von maximal 5 kW, aufweisen, und/oder eine Nennspannung von minimal 10 V, insbesondere von minimal 20 V, und/oder von maximal 100 V, insbesondere von maximal 50 V, und/oder einen maximalen Energieinhalt von minimal 100 Wh, insbesondere von minimal 200 Wh, und/oder von maximal 1000 Wh, insbesondere von maximal 500 Wh, und/oder eine Masse von minimal 0,5 kg, insbesondere von minimal 1 kg, und/oder von maximal 10 kg, insbesondere von maximal 5 kg, und/oder eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm.

Die Erfindung betrifft auch ein Bearbeitungssystem, wobei das Bearbeitungssystem aufweist: einen Akkupack mit den vorstehend beschriebenen Merkmalen der Erfindung und ein elektrisch angetriebenes Bearbeitungsgerät, wobei der Akkupack und das Bearbeitungsgerät zur elektrischen Verbindung miteinander zur Versorgung des Bearbeitungsgeräts mit elektrischer Antriebsleistung von dem Akkupack ausgebildet sind.

Die Erfindung betrifft schließlich auch ein Verfahren zur Herstellung eines Akkupacks mit den vorstehend beschriebenen Merkmalen der Erfindung, wobei das Verfahren die Schritte aufweist:
a) Anordnen von mehreren Pouchzellen derart in einem Stapel, wobei die Pouchzellen Zelltabs aufweisen und derart ausgebildet sind, dass die Zelltabs auf einer gemeinsamen Tabseite des Stapels in zwei Tabspalten angeordnet sind;
b) Anordnen von einer Leiterplatte auf der gemeinsamen Tabseite des Stapels, wobei die Leiterplatte Ausnehmungen aufweist, durch die sich die Zelltabs auf die von den Pouchzellen abgewandte Seite der Leiterplatte erstrecken; und
c) Elektrisches Verbinden der Leiterplatte mit den Zelltabs, wobei wenigstens ein elektrischer Zellverbinder zur elektrischen Verbindung von zwei Zelltabs zweier benachbarter Pouchzellen miteinander und/oder mit der Leiterplatte eingesetzt wird, und wobei der wenigstens eine Zellverbinder auf der abgewandten Seite der Leiterplatte an dieser angebracht wird.

Insbesondere kann der Schritt b) zeitlich nach dem Schritt a) durchgeführt werden, und der Schritt c) zeitlich nach dem Schritt b). Schritt c) kann weiter aufweisen: stoffschlüssiges Verbinden, insbesondere Verschweißen, der Zelltabs benachbarter Pouchzellen mit dem wenigstens einen elektrischen Zellverbinder und/oder
kraft- und/oder formschlüssiges Verbinden, insbesondere Verpressen oder Crimpen, der Zelltabs benachbarter Pouchzellen mit dem wenigstens einen elektrischen Zellverbinder für eine elektrische Verbindung.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Figur 1: eine beispielhafte Anordnung eines erfindungsgemäßen Akkupacks in Vorderansicht;
- Figur 2: das erfindungsgemäße Akkupack der Figur 1 in Schnittansicht gemäß der Schnittlinie A-A in Figur 1; und
- Figur 3: einen Zellverbinder des erfindungsgemäßen Akkupacks der Figur 1 in Draufsicht.

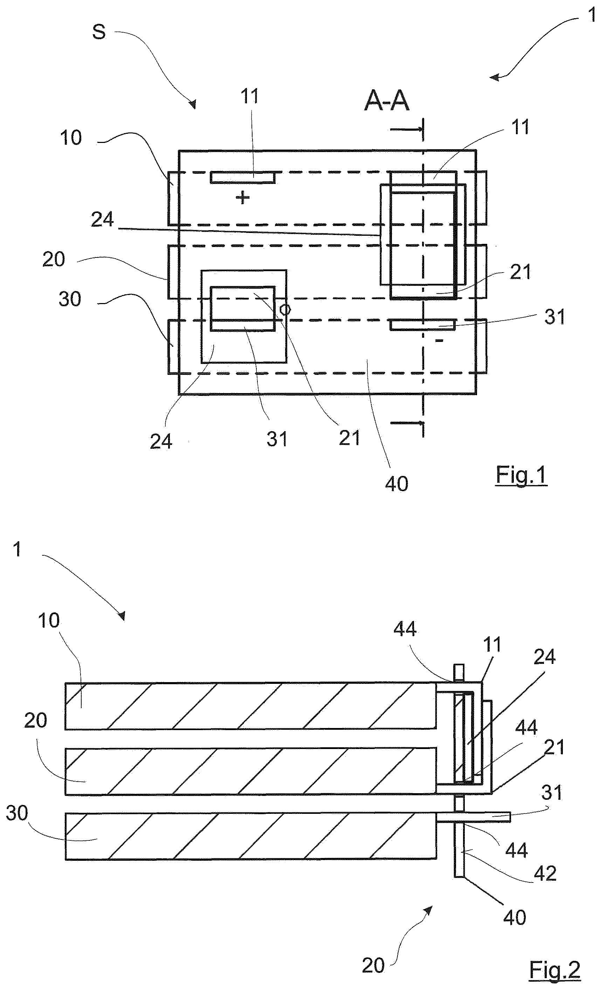

Die Figuren 1 und 2 zeigen stark schematisiert und vereinfacht eine Anordnung von mehreren (drei) Pouchzellen 10, 20, 30 eines erfindungsgemäßen Akkupacks, deren Zelltabs 11, 21, 31 mit einer Leiterplatte 40 elektrisch verbunden werden.

Dabei ist in der Figur 1 als Vorderansicht erkennbar, dass für die Reihenschaltung von den beispielhaften drei Pouchzellen zwei Zellverbinder 24 der elektrischen Verbindung der Zelltabs 11, 21, 31 zweier benachbarter Pouchzellen 10. 20, 30 erforderlich sind.

Die Pouchzellen haben in bekannter weise einen flachen Aufbau, wobei die Zelltabs mit einer oberen bzw. unteren Seitenfläche außenseitig bündig abschließen. Dadurch können die Zelltabs zweier benachbarter Pouchzellen in dem durch die Pouchzellen 10, 20, 30 gebildeten Stapel S entweder sehr nah nebeneinander liegen (vgl. in Figur 1, linke Spalte, Bezugszeichen 21 und 31) und nur durch einen Luftspalt voneinander getrennt sein. Alternativ kann der von den Zelltabs zu überspannende Zwischenraum jedoch zusätzlich zu dem Luftspalt auch zwei Pouchzellendicken umfassen (vgl. in Figur 1, rechte Spalte, Bezugszeichen 11 und 21).

In Figur 1 erkennt man schließlich auch die beiden den Minuspol des Akkupacks 10 und den Pluspol des Akkupacks 10 bildenden Zelltabs (vgl. in Figur 1, rechte Spalte unten, Bezugszeichen 31 und linke Spalte oben, Bezugszeichen 11).

Die Figur 2 ist eine Schnittansicht gemäß der Schnittlinie A-A in Figur 1.

Man erkennt in dieser geschnittenen Seitenansicht die Leiterplatte 40 mit den Aussparungen 44, durch die sich die Zelltabs 11, 21, 31 erstrecken können. Weiterhin erkennt man beispielhaft, wie die Zelltabs 11 und 21 über einem elektrischen Zellverbinder 24 umgeschlagen bzw. umgebogen werden. In dem Überlappbereich können die Zelltabs 11, 21 mit dem Zellverbinder 24 elektrisch verbunden werden, beispielsweise stoffschlüssig durch Verschweißen oder formschlüssig durch Vercrimpen und Verpressen.

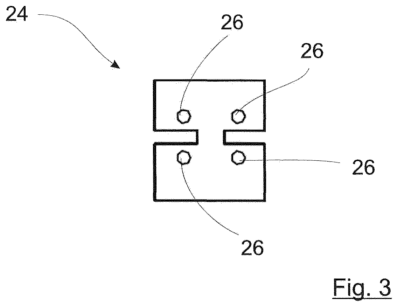

Die Figur 3 zeigt schließlich beispielhaft eine Draufsicht auf einen elektrischen Zellverbinder 24, der auf seiner im eingebauten Zustand den Zelltabs zugewandten Oberseite Schweißpunkte 26 aufweist.

## Patentansprüche

1. Akkupack (1) zur Versorgung eines elektrisch angetriebenen Bearbeitungsgeräts mit elektrischer Antriebsleistung, wobei der Akkupack (10) aufweist:
- wenigstens zwei Pouchzellen (10, 20, 30), wobei die Pouchzellen (10) Zelltabs (11, 21, 31) aufweisen und derart ausgebildet und in einem Stapel (S) angeordnet sind, dass die Zelltabs (11, 21, 31) auf einer gemeinsamen Tabseite (22) des Stapels (S) in Tabspalten (22a, 22b) angeordnet sind,
- eine Leiterplatte (40), wobei die Leiterplatte (40) auf der gemeinsamen Tabseite (22) des Stapels (S) angeordnet ist und mit den Zelltabs (11, 21, 31) elektrisch verbunden ist, und
- wenigstens einen elektrischen Zellverbinder (24) zur elektrischen Verbindung von zwei Zelltabs (11, 21, 31) zweier benachbarter Pouchzellen (10, 20, 30) mit der Leiterplatte (40),
wobei die Leiterplatte (40) Ausnehmungen (44) aufweist, durch die sich die Zelltabs (11, 21, 31) auf die von den Pouchzellen (10, 20, 30) abgewandte Seite (42) der Leiterplatte (40) erstrecken und wobei der wenigstens eine Zellverbinder (24) auf der abgewandten Seite (42) der Leiterplatte (40) an dieser angebracht ist.

2. Akkupack (1) nach Anspruch 1,
wobei zwei Zelltabs (11, 21, 31) zweier benachbarter Pouchzellen (10, 20, 30) zur elektrischen Verbindung mit der Leiterplatte (40) unmittelbar miteinander und mit dem wenigstens einen elektrischen Zellverbinder (24) verbunden sind.

3. Akkupack (1) nach Anspruch 1 oder 2,
wobei die Leiterplatte (40) sich in einer Plattenebene (40E) erstreckt, die parallel zu einer Tabebene (22E) der Tabseite (22) angeordnet ist, wobei die Tabebene (22E) der Tabseite (22) eine durch die Tabspalten (22a, 22b) definierte Ebene umfasst.

4. Akkupack (1) nach einem der vorhergehenden Ansprüche,
wobei die Leiterplatte (40) Messelektronik zur Messung von Spannungen der Pouchzellen (10, 20, 30) und/oder eine auslösbare Sicherungseinrichtung aufweist.

5. Akkupack (1) nach einem der vorhergehenden Ansprüche,
wobei der wenigstens eine Zellverbinder (24) starr ausgebildet ist.

6. Akkupack (1) nach einem der vorhergehenden Ansprüche,
wobei die Zelltabs (11, 21, 31) benachbarter Pouchzellen (10, 20, 30) mit dem wenigstens einen elektrischen Zellverbinder (24) und optional miteinander durch eine stoffschlüssige Verbindung, insbesondere eine Schweißverbindung, oder durch eine kraft- und/oder formschlüssige Verbindung, insbesondere Verpressung oder Crimpen, elektrisch verbunden sind.

7. Akkupack (1) nach einem der vorhergehenden Ansprüche,
wobei der wenigstens eine elektrische Zellverbinder (24) auf seiner den Zelltabs (11, 21, 31) zugewandten Seite Schweißpunkte (26), insbesondere für das Herstellen einer Schweißverbindung durch Widerstandsschweißen, aufweist.

8. Akkupack (1) nach einem der vorhergehenden Ansprüche,
wobei der wenigstens eine elektrische Zellverbinder (24) auf seiner der Leiterplatte (40) zugewandten Seite mit der Leiterplatte (40) durch eine stoffschlüssige Verbindung, insbesondere eine Lötverbindung elektrisch verbunden ist.

9. Akkupack (1) nach einem der vorhergehenden Ansprüche, wobei der Akkupack (1) aufweist:
- eine weitere Leiterplatte, wobei die weitere Leiterplatte auf der Tabseite (22) entfernter als die Leiterplatte (40) von dem Stapel (S) angeordnet ist, und
- wobei die weitere Leiterplatte Leistungselektronik trägt, wobei die Leistungselektronik zur Steuerung der Abgabe der Antriebsleistung von dem Akkupack (1) und/oder einer Aufnahme von Ladeleistung durch den Akkupack (1) ausgebildet ist.

10. Akkupack (1) nach einem der vorhergehenden Ansprüche, wobei der Akkupack (1) aufweist:
- eine weitere Leiterplatte, wobei die weitere Leiterplatte auf der Tabseite (22) entfernter als die Leiterplatte (40) von dem Stapel (S) angeordnet ist, und
- wobei die weitere Leiterplatte Benutzerschnittstellenelektronik, wobei die Benutzerschnittstellenelektronik zur Interaktion mit einem Benutzer ausgebildet ist, und/oder Übertragungselektronik trägt, wobei die Übertragungselektronik zur kabellosen Übertragung von mindestens einem Betriebsparameter und/oder Betriebszustand ausgebildet ist.

11. Akkupack (1) nach einem der vorhergehenden Ansprüche, wobei der Akkupack (1) aufweist:
- eine weitere Leiterplatte, wobei die weitere Leiterplatte auf der Tabseite (22) entfernter als die Leiterplatte (40) von dem Stapel (S) angeordnet ist, und
- wobei die weitere Leiterplatte (54) eine auslösbare Sicherung zum Schutz des Akkupacks aufweist.

12. Bearbeitungssystem, wobei das Bearbeitungssystem aufweist:
- einen Akkupack (1) nach einem der vorhergehenden Ansprüche 1 bis 11, und
- ein elektrisch angetriebenes Bearbeitungsgerät,
- wobei der Akkupack (1) und das Bearbeitungsgerät zur elektrischen Verbindung miteinander zur Versorgung des Bearbeitungsgeräts mit elektrischer Antriebsleistung von dem Akkupack (1) ausgebildet sind.

13. Verfahren zur Herstellung eines Akkupacks (1), insbesondere nach einem der Ansprüche 1 bis 11, wobei das Verfahren die Schritte aufweist:
a) Anordnen von mehreren Pouchzellen (10, 20, 30) derart in einem Stapel (S), wobei die Pouchzellen (10, 20, 30) Zelltabs (11, 21, 31) aufweisen und derart ausgebildet sind, dass die Zelltabs (11, 21, 31) auf einer gemeinsamen Tabseite (22) des Stapels (S) in zwei Tabspalten (22a, 22b) angeordnet sind;
b) Anordnen von einer Leiterplatte (40) auf der gemeinsamen Tabseite (22) des Stapels (S), wobei die Leiterplatte (40) Ausnehmungen (44) aufweist, durch die sich die Zelltabs (11, 21, 31) auf die von den Pouchzellen (10, 20, 30) abgewandte Seite (42) der Leiterplatte (40) erstrecken; und
c) Elektrisches Verbinden der Leiterplatte (40) mit den Zelltabs (22), wobei wenigstens ein elektrischer Zellverbinder (24) zur elektrischen Verbindung von zwei Zelltabs (11, 21, 31) zweier benachbarter Pouchzellen (10, 20, 30) miteinander und/oder mit der Leiterplatte (40) eingesetzt wird, und wobei der wenigstens eine Zellverbinder (24) auf der abgewandten Seite (42) der Leiterplatte (40) an dieser angebracht wird.

14. Verfahren nach Anspruch 13,
- wobei der Schritt b) zeitlich nach dem Schritt a) durchgeführt wird, und
- wobei der Schritt c) zeitlich nach dem Schritt b) durchgeführt wird und aufweist: stoffschlüssiges Verbinden, insbesondere Verschweißen, der Zelltabs (11, 21, 31) benachbarter Pouchzellen (10, 20, 30) mit dem wenigstens einen elektrischen Zellverbinder (24) und/oder miteinander und/oder kraft- und/oder formschlüssiges Verbinden, insbesondere Verpressen oder Crimpen, der Zelltabs (11, 21, 31) benachbarter Pouchzellen (10, 20, 30) mit dem wenigstens einen elektrischen Zellverbinder (24) und/oder miteinander für eine elektrische Verbindung.
